# EUROPEAN PATENT APPLICATION

(11) **EP 1 445 545 A1**
(43) Date of publication of application: **11.08.2004**
(21) Application number: 04100253.6
(22) Date of filing: 23.01.2004
(51) Int. Cl.: F24C 15/18, A47J 37/00

(54) **Small electric household appliance for cooking and heating food, and cabinet comprising such a small electric household appliance**

(30) Priority: 24.01.2003 IT MI20030111
(71) Applicant: SMEG S.p.A., I-42016 Guastalla (IT)
(72) Inventor: Lupi, Gianluca, 42016 Guastalla (IT); Mastilovic, Nebojsa, 42023 Cadelbosco di Sopra (IT)
(74) Representative: Jorio, Paolo, Dr. Ing.

(57) **Abstract**

A small electric household appliance (14) for cooking and heating food has a first portion (15) cooperating with a second portion (16) movable with respect to the first portion (15), which is fittable inside a cavity (5) in a cabinet (1), while the second portion (16) has hook-on members (26) for attachment to a frame (12) movable across the cavity (5).

## Description

The present invention relates to a small electric household appliance for cooking and heating food.

A kitchen normally comprises a wide range of equipment for cooking and heating food, the most common of which are so-called large electric household appliances, i.e. gas cookers and electric ovens. A gas cooker and electric oven are normally integrated into one block known as a "free-standing" cooker, which comprises a normally metal cabinet equipped with a cooking range defined by a group of gas burners, and an electric or gas oven. In some cases, instead of or together with the gas burners, the cooking range comprises electric hot-plates.

As opposed to a "free-standing" cooker, cooking ranges and ovens may be integrated in a number of cabinets forming part of a modular kitchen. Alongside large electric household appliances, a kitchen also comprises other, so-called small electric household appliances, some of which for cooking and heating food, and the most common of which include toasters and sandwich-type hot-plates or grills for toasting bread or grilling meat. Such appliances are relatively small, are normally kept on a worktop, on average are only used for a limited length of time during the day, and are left on the worktop ready for use, so that the parts of the appliance contacting the food are exposed to dust and other pollutants. Small electric household appliances of the above type for cooking and heating food, in fact, are potentially unhygienic.

It is an object of the present invention to provide a small electric household appliance for cooking and heating food, designed to reduce the aforementioned drawback of the prior art.

According to the present invention, there is provided a small electric household appliance for cooking and heating food, the small electric household appliance comprising a first portion for heating food, and a second portion for supporting the food and cooperating with the first portion; said small electric household appliance being characterized by being fittable inside an inner cavity of a housing that can be opened selectively.

The present invention also relates to a cabinet.

According to the present invention, there is provided a cabinet comprising a cavity defined by a number of walls; and a frame movable with respect to said walls; said cabinet being characterized by incorporating a small electric household appliance for cooking and heating food as claimed in any one of Claims 1 to 4; the first portion of the small electric household appliance being fitted to one of said walls inside said cavity, and the second portion being fitted to said frame.

Integrating the small electric household appliance in a cabinet, besides being more hygienic as compared with known small electric household appliances, also has the further advantage of the small electric household appliance no longer taking up space on a worktop.

A preferred, non-limiting embodiment of the present invention will be described by way of example with reference to the accompanying drawings, in which:
Figure 1 shows a view in perspective, with parts removed for clarity, of a "free-standing" cooker incorporating a small electric household appliance in accordance with the present invention;
Figure 2 shows a larger-scale view in perspective, with parts removed for clarity, of a detail of the "free-standing" cooker in Figure 1;
Figure 3 shows a front view in perspective of a component part of the small electric household appliance for cooking and heating food according to the present invention;
Figure 4 shows a rear view in perspective of the Figure 3 component;
Figures 5 and 6 show further component parts of the small electric household appliance for cooking and heating food;
Figure 7 shows a view in perspective of a variation of the Figure 3 and 4 component;
Figure 8 shows a side view, with parts removed for clarity, of the small electric household appliance in Figure 2;
Figures 9 and 10 show views in perspective of a variation of the Figure 2 small electric household appliance in two different operating positions;
Figure 11 shows a front view of a detail of the small electric household appliance in Figure 9;
Figure 12 shows a view in perspective of a further variation of the small electric household appliance in Figure 2;
Figure 13 shows a section along line XIII-XIII of the small electric household appliance in Figure 12.

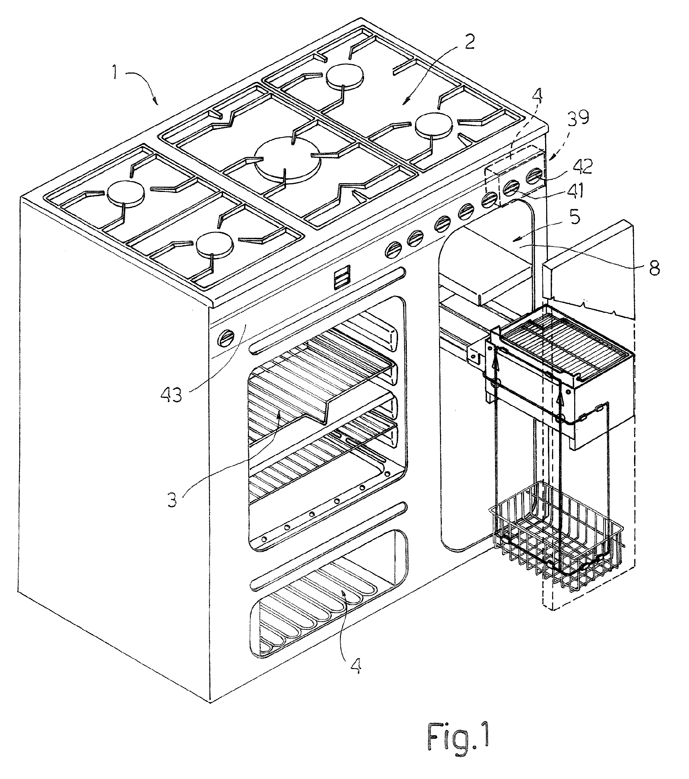

Number 1 in Figure 1 indicates as a whole a "free-standing" cooker, which comprises a cabinet incorporating a cooking range 2, an oven 3, and two cavities 4 and 5 located beneath and alongside oven 3 respectively.

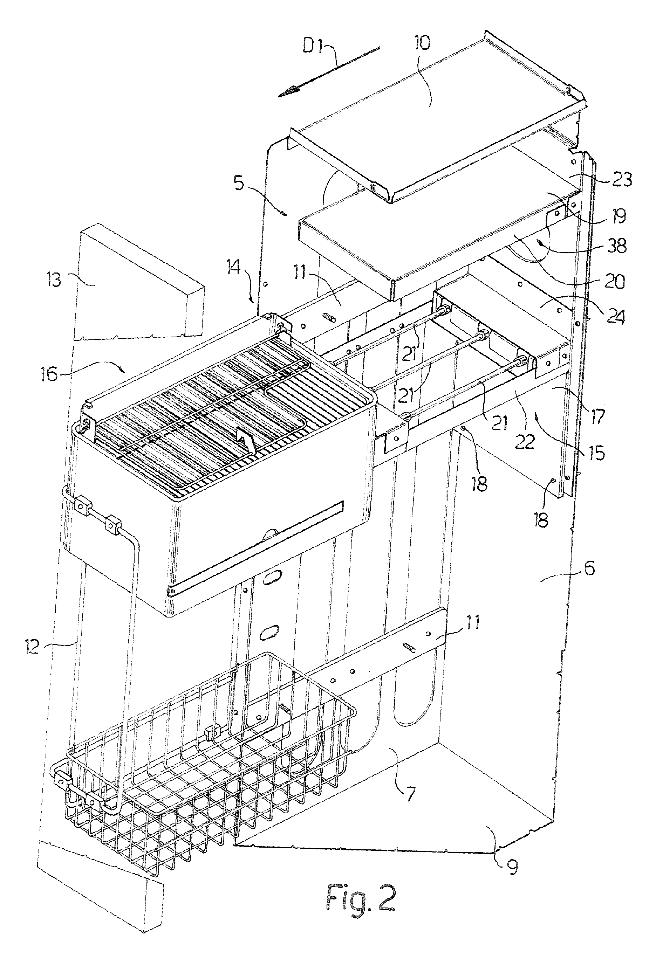

Oven 3 is closed by a swing door (not shown), and cavity 4 is occupied by a drawer (not shown). With reference to Figure 2, cavity 5 is defined by a rear wall 6, two lateral walls 7 and 8 (Figure 1), a bottom wall 9, and a top wall 10, and comprises guides 11 fitted to lateral wall 7. A metal frame 12 is fitted to slide along guides 11 for selective insertion/removal inside/from cavity 5 in a direction D1, and supports a panel 13 for closing cavity 5. A small electric household appliance 14 for cooking and heating food is housed inside cavity 5 and supported partly by wall 6 and partly by frame 12. In other words, electric household appliance 14 comprises a fixed portion 15 secured to wall 6, and a movable portion 16 attached to frame 12. Fixed portion 15 comprises an upright 17, which has holes and is fittable to wall 6 by screws 18, and from which extend an electric plate resistor 19 supported by a metal rim 20, and a group of tubular electric resistors 21 supported by a metal rim 22. Resistor 19 is made of mica, and each resistor 21 is a quartz resistor. Rims 20 and 22 have respective brackets 23 and 24 fixed by screws 18 to upright 17; rim 22 is fitted beneath and a given distance from rim 20; and electric resistors 19 and 21 extend in a horizontal direction D1, and are fitted to and project from upright 17.

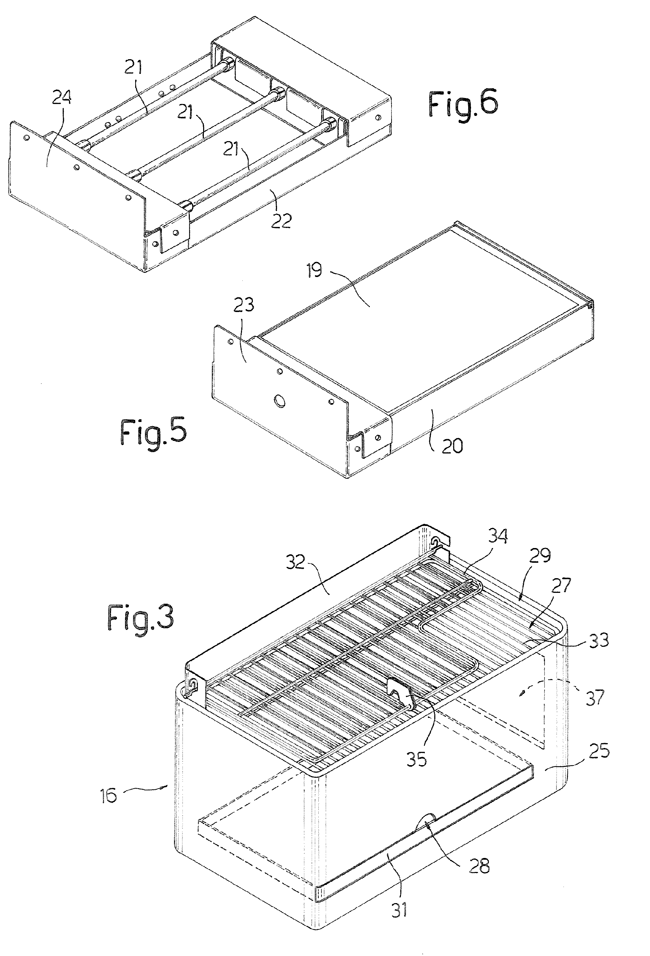

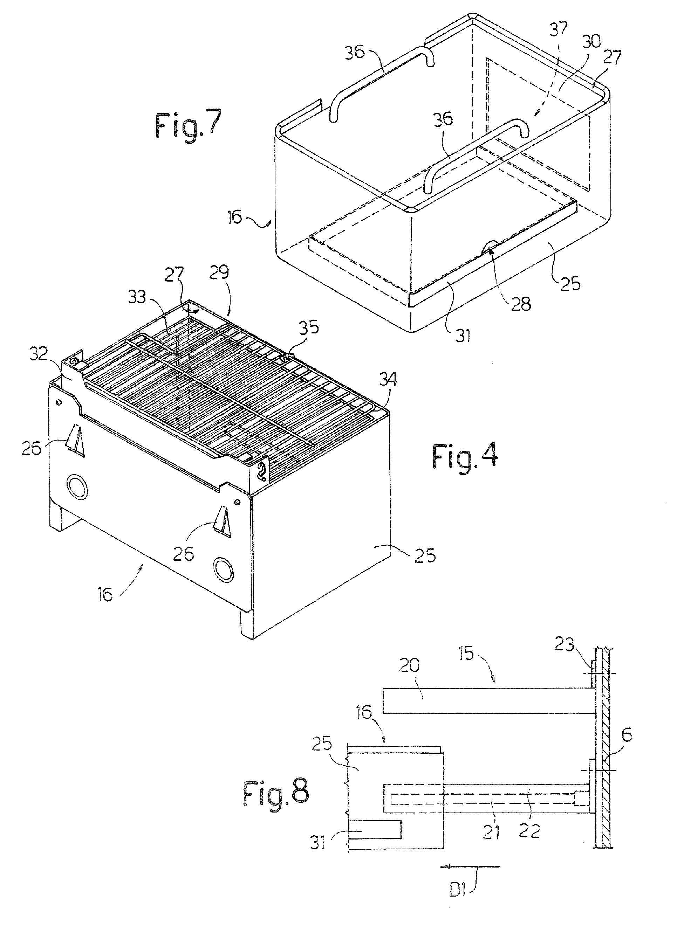

With reference to Figures 3 and 4, movable portion 16 comprises a casing 25 having four walls connected to form a closed loop; and hooks 26 (Figure 4) by which to hang casing 25 onto frame 12. Casing 25 comprises a top seat 27 defined by the top edges of casing 25; and a lateral seat 28 located beneath seat 27 and defined by an opening in one wall of casing 25. Seat 27 houses a food supporting member, which may be a grill 29, as shown in Figures 3 and 4, or a plate 30, as shown in Figure 7; and seat 28 houses a pull-out drawer 31 for catching any food scraps falling accidentally from the supporting member, in particular from grill 29. Grill 29 comprises a sheet metal support 32; a grill panel 33 fixed to support 32; and a grill panel 34 hinged to support 32 and fixable to grill panel 33 by a hook 35. Plate 30 is made of refractory material, such as ceramic, or is defined by a Teflon-coated metal panel, and has two grips 36 projecting from plate 30 itself. Both grill 29 and plate 30 rest on casing 25 for easy removal from the operating position. Casing 25 has an opening 37 through which to insert resistors 21 between seats 27 and 28 when frame 12 is inserted inside cavity 5. Fixed portion 15 and movable portion 16 are assembled so that, when frame 12 is fully inserted inside cavity 5, resistor 19 is located over seat 27, and resistors 21 are located beneath seat 27. In other words, grill 29 or plate 30 and the food supported on it are located between resistor 19 and resistors 21, as shown in Figure 8, in which casing 25 is shown partly connected to resistors 19 and 21.

With reference to Figure 2, cavity 5 comprises an opening 38 connected to a suction conduit not shown in the drawings.

With reference to Figure 1, cooker 1 comprises a regulating device 39, which comprises a power unit 40 connected to the electricity mains and comprising a rheostat and a timer (not shown) controlled respectively by two regulating knobs 41 and 42 on a front panel 43 of cooker 1 to regulate current supply to resistors 19 and 21 and, therefore, temperature and power supply time, i.e. cooking and/or heating time.

In actual use, and assuming seat 27 is equipped with grill 29, frame 12 is extracted from cavity 5 together with movable portion 16 of electric household appliance 14; the food, e.g. slices of bread (not shown), is placed between grill panels 33 and 34, which are then connected by hook 35; frame 12 is inserted inside cavity 5 to position grill 29 between resistors 19 and 21; the temperature and heating time of resistors 19 and 21 are set using knobs 41 and 42; and, when the heating time expires, frame 12 is extracted from cavity 5, and the food removed from grill 29.

As it is being cooked and/or heated, the food may produce vapour, which is extracted through opening 38 connected to the suction conduit not shown in the drawings.

Grill 29 can be simply lifted out for cleaning, washing, or replacement by plate 30; drawer 31 can be pulled out easily to empty any food scraps dropping off grill 29; and the whole of portion 16 can be removed easily from frame 12 for cleaning or washing.

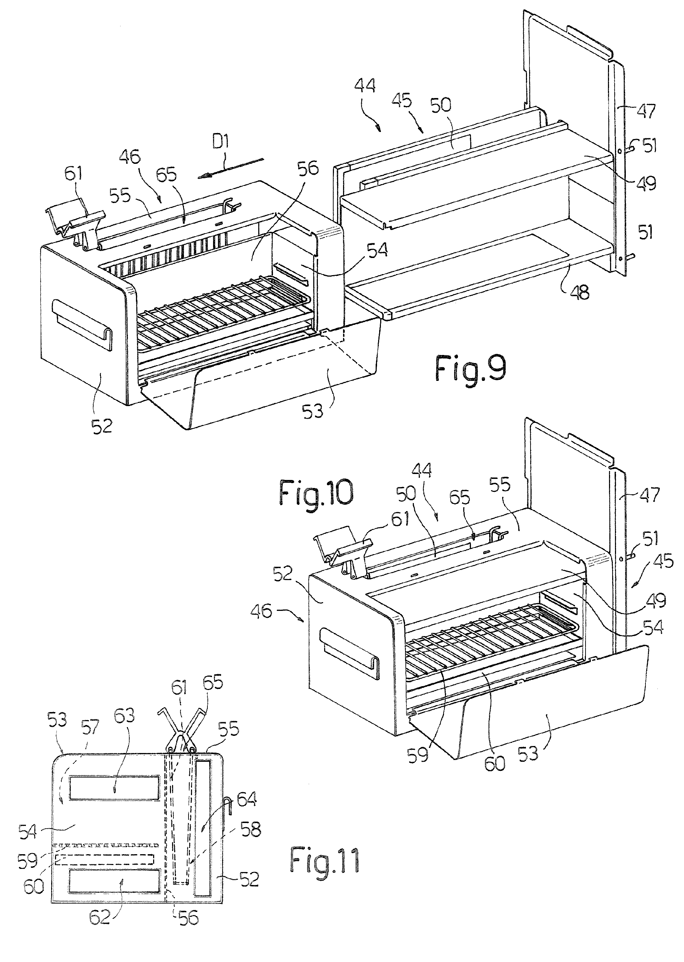

Figures 9, 10 and 11 show a variation of the small electric household appliance indicated 44, and which comprises a portion 45 fittable to wall 6 of cooker 1, and a portion 46 fittable to frame 12 by hooks. Portion 45 comprises an upright 47 fitted with three flat resistors 48, 49, 50 extending perpendicularly with respect to upright 47. Resistors 48 and 49 are parallel to each other, while resistor 50 is positioned vertically and extends perpendicularly to resistors 48 and 49. Upright 47 can be fitted selectively to wall 6 of cavity 5 by screws 51.

Portion 46 comprises a casing 52 closed by a cover 53 and having a front wall 54 and a top wall 55. Inside, casing 52 has a wall 56 defining two cavities 57 and 58 shown more clearly in Figure 11. Cavity 57 is equipped with a grill 59 and a tray 60 underneath; and cavity 58 with a bread gripper 61. Front wall 54 has three slots 62, 63, 64 by which to insert resistors 48, 49, 50 inside cavities 57 and 58, and top wall 55 has a slot 65 by which to insert and extract gripper 61.

Small electric household appliance 44 comprises a regulating device for regulating each resistor 48, 49, 50 independently.

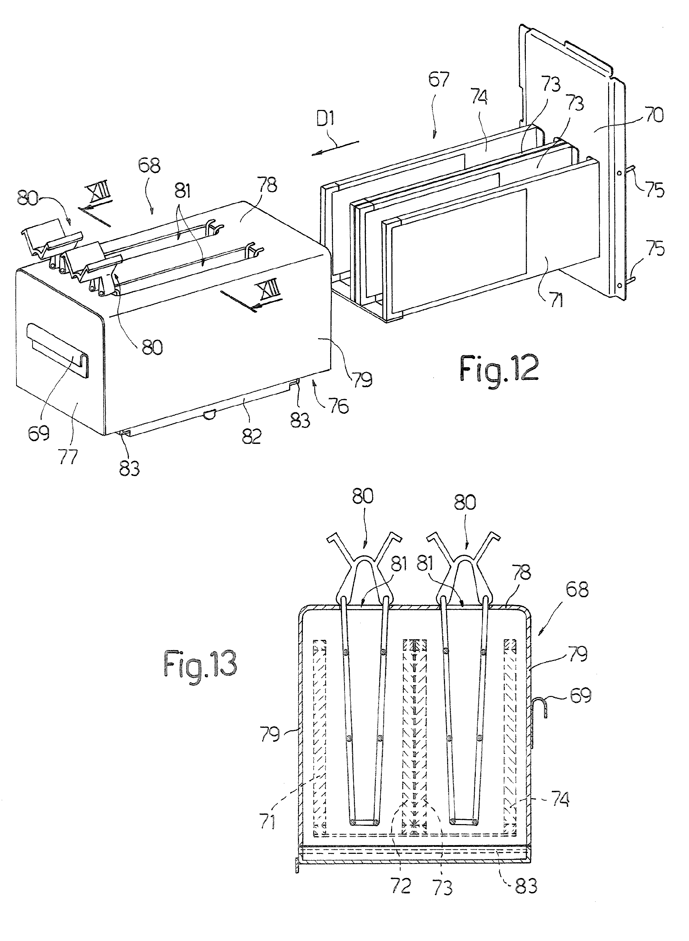

Figures 12 and 13 show a variation of the small electric household appliance indicated 66, and which comprises a fixed portion 67 fittable to wall 6 of cooker 1, and a movable portion 68 fittable to frame 12 by hooks 69. Portion 67 comprises an upright 70 fitted with four flat resistors 71, 72, 73, 74, which extend in direction D1 perpendicularly to upright 70, and are positioned vertically and parallel to one another. Upright 70 can be fitted selectively to wall 6 of cavity 5 by screws 75.

Portion 68 comprises a casing 76 having a front wall 77, a top wall 78, and two lateral walls 79; and two grippers 80. Top wall 78 has two slots 81, parallel to direction D1, by which to insert grippers 80 inside casing 76 so that they rest on top wall 78. Portion 68 also comprises a drawer 82 which slides inside two guides 83 integral with casing 76. A hook 69 is fitted to one lateral wall 79 (Figure 13), and another hook 69 to front wall 77 (Figure 12), to hook portion 68 onto frame 12 (not shown in Figures 12 and 13). Small electric household appliance 66 also has a temperature regulating device (not shown) incorporated in cooker 1.

In actual use, the food, particularly slices of bread, is inserted inside grippers 80, which are then inserted inside casing 76 through slots 81; and frame 12 is slid in to connect casing 76 to resistors 71, 72, 73, 74 and toast the bread.

In view of the ease with which it is assembled, small electric household appliance 14, 44, 66 may be installed in kit form in existing "free-standing" cooker or modular kitchen cabinets, or may be used to equip new "free-standing" cookers or modular kitchens. The resistor temperature regulating device may be installed inside or outside cavity 5.

## Claims

1. A small electric household appliance for cooking and heating food, the small electric household appliance comprising a first portion (15; 45; 67) for heating food, and a second portion (16; 46; 68) for supporting the food and cooperating with the first portion (15; 45; 67); said small electric household appliance (14; 44; 66) being **characterized by** being fittable inside an inner cavity (5) of a housing (1) that can be opened selectively.

2. A small electric household appliance as claimed in Claim 1, **characterized in that** said first portion (15; 45; 67) comprises fastening members (17, 18, 23, 24; 47, 51; 70, 75) for assembly to said housing (1), and said second portion (16; 46; 68) comprises hook-on members (26; 69) for attachment to said housing (1).

3. A small electric household appliance as claimed in Claim 1 or 2, **characterized in that** the first portion (15; 45; 67) is fixed and comprises heating bodies (19, 21; 48, 49, 50; 71, 72, 73, 74); while the second portion (16; 46; 68) is hooked onto a frame (12) of said housing (1); said frame (12) being movable with respect to the first portion (15; 45; 67).

4. A small electric household appliance as claimed in any one of the foregoing Claims, **characterized in that** the first portion (15; 45; 67) and the second portion (16; 46; 68) nest selectively one inside the other.

5. A cabinet comprising a cavity (5) defined by a number of walls (6, 7, 8, 9, 10); and a frame (12) movable with respect to said walls (6, 7, 8, 9, 10); said cabinet (1) being **characterized by** incorporating a small electric household appliance (14; 44; 66) for cooking and heating food as claimed in any one of Claims 1 to 4; the first portion (15; 45; 67) of the small electric household appliance (14; 44; 66) being fitted to one of said walls (6, 7, 8, 9, 10) inside said cavity (5), and the second portion (16; 46; 68) being fitted to said frame (12).

6. A cabinet as claimed in Claim 5, **characterized in that** said first portion (15; 45; 67) comprises heating bodies (19, 21; 48, 49, 50; 71, 72, 73, 74).

7. A cabinet as claimed in Claim 6, **characterized in that** said heating bodies (19, 21; 48, 49, 50; 71, 72, 73, 74) are electric resistors (19, 21; 48, 49, 50; 71, 72, 73, 74).

8. A cabinet as claimed in Claim 7, **characterized in that** said electric resistors (19, 21; 48, 49, 50; 71, 72, 73, 74) comprise plates (19; 48, 49, 50; 71, 72, 73, 74).

9. A cabinet as claimed in Claim 7, **characterized in that** said electric resistors comprise bars (21).

10. A cabinet as claimed in any one of Claims 7 to 9, **characterized in that** said electric resistors (19, 21; 48, 49, 50; 71, 72, 73, 74) extend in a horizontal direction (D1), and are supported by an upright (17; 47, 70) fixable to one of said walls (6, 7, 8, 9, 10).

11. A cabinet as claimed in Claim 10, **characterized in that** said frame (12) is movable in said direction (D1) .

12. A cabinet as claimed in one of Claims 6 to 11, **characterized in that** said second portion (16) comprises a food supporting structure (25, 29; 25, 30; 52, 59, 61; 76, 80).

13. A cabinet as claimed in Claim 12, **characterized in that** said food supporting structure (25, 29; 25, 30; 52, 59, 61; 76, 80) comprises a casing (25; 52; 76); said casing (25; 52; 76) being designed to house said heating bodies (19, 21; 48, 49, 50; 71, 72, 73, 74).

14. A cabinet as claimed in Claim 12 or 13, **characterized in that** said food supporting structure (25, 29; 25, 30; 52, 59, 61; 76, 80) comprises food supporting members (29; 30; 59, 61; 80) selectively housable inside said casing (25; 52; 76).

15. A cabinet as claimed in Claim 14, **characterized in that** said food supporting members (29; 30; 59, 61; 80) comprise at least one bread gripper (61; 80).

16. A cabinet as claimed in Claim 14 or 15, **characterized in that** said food supporting members (29; 30; 59, 61; 80) comprise a grill (29; 59).

17. A cabinet as claimed in Claim 14 or 15, **characterized in that** said food supporting members (29; 30; 59, 61; 80) comprise a plate (30).

18. A cabinet as claimed in any one of Claims 13 to 17, **characterized in that** said casing (25; 52; 76) comprises hooks (26; 69) for hooking said second portion (16; 46; 68) onto said frame (12).

19. A cabinet as claimed in any one of Claims 5 to 18, **characterized by** comprising a panel (13) fitted to said frame (12) to selectively close said cavity (5).

20. A cabinet as claimed in any one of Claims 5 to 18, **characterized in that** said cabinet (1) is a "free-standing" cooker.

21. A cabinet as claimed in Claim 21, **characterized in that** said "free-standing" cooker comprises an oven (3); said cavity (5) being located alongside said oven (3).
